# EUROPÄISCHE PATENTSCHRIFT

(11) **EP 3 036 464 B1**
(45) Veröffentlichungstag und Bekanntmachung des Hinweises auf die Patenterteilung: **24.07.2019**
(21) Anmeldenummer: 14747625.3
(22) Anmeldetag: 01.08.2014
(51) Int. Cl.: F16J 15/34

(54) **DICHTUNGSANORDNUNG MIT EINER KÜHLVORRICHTUNG**
SEAL ARRANGEMENT WITH A COOLING DEVICE
DISPOSITIF D'ÉTANCHÉITÉ AVEC UN DISPOSITIF DE REFROIDISSEMENT

(30) Priorität: 19.08.2013 DE 102013216353
(43) Veröffentlichungstag der Anmeldung: 29.06.2016
(73) Patentinhaber: KSB SE & Co. KGaA, 67227 Frankenthal (DE)
(72) Erfinder: ENNS, Eugen, 67227 Frankenthal (DE); KELLER, Thomas, 67227 Frankenthal (DE); LENK, Jan Hendrik, 67227 Frankenthal (DE); MEYER, Gerhard, 67227 Frankenthal (DE)
(86) Internationale Anmeldenummer: PCT/EP2014/066587
(87) Internationale Veröffentlichungsnummer: WO 2015/024760

(56) Entgegenhaltungen:
- WO-A1-2009/067143
- GB-A- 2 482 157
- JP-A- 2007 032 652
- JP-A- 2011 058 517
- US-A- 3 419 279
- US-A- 5 375 852

## Beschreibung

Die Erfindung betrifft eine Dichtungsanordnung mit einer Kühlvorrichtung, insbesondere eine Gleitringdichtung.

Eine Gleitringdichtung wird zum Abdichten zwischen einem drehenden Teil, beispielsweise einer Welle und einem ortsfesten Teil, beispielsweise einem Gehäuse, verwendet. Beim Einsatz in einer Kreiselpumpe ermöglicht eine Gleitringdichtung das Fluid im Innern des Gehäuses bei hohem Fluiddruck gegen die Umgebung abzudichten.

Die Gleitringdichtung besteht aus einem mit der Welle verbundenen rotierenden ersten Ring und einem mit dem Gehäuse verbundenen ortsfesten zweiten Ring, wobei beide mittels Federkraft gegeneinander gedrückt werden um die Dichtwirkung zu verstärken.

Die Kontaktfläche zwischen dem ersten und dem zweien Ring ist stark mit Reibung behaftet, die durch die Auswahl geeigneter Materialien und einer sorgfältigen Bearbeitung der Oberflächen reduziert wird. Trotzdem lässt sich Reibung an dieser Fläche systembedingt nicht verhindern. Dabei entstehende Wärme ist für die Dichtungsanordnung störend. Das Abführen der Wärme aus dem Bereich der Gleitfläche ist regelmäßig Gegenstand der Forschung aller Gleitringdichtungshersteller.

Die entstehende Wärme kann mittels eines eigens zugeführten Kühlmediums abgeführt werden. Hierfür eignet sich insbesondere Wasser, das möglichst nah an die Dichtfläche herangeführt werden soll. Die DE 24 09 954 A1 zeigt ein Leitungssystem in der direkten Umgebung einer Gleitringdichtung, mit dem versucht wird, das kühlende Medium in einem möglichst langen Kontakt mit den erwärmten Bereichen zu halten.

Die DE 42 38 932 A1 zeigt eine Gleitringdichtung bei der die Kühlung dadurch erreicht werden soll, dass auf der Luftseite der Dichtung Kühlrippen vorgesehen werden. Diese Vergrößerung der Oberfläche soll eine Wärmeabgabe verbessern.

Zum Schutz des Förderfluids vor der Wärme, die in der Dichtung freigesetzt wird, besteht noch die Möglichkeit einer räumlichen Trennung, wie in der DE 101 20 409 A1 gezeigt wird. Die Dichtung wird von der Pumpe getrennt und der Bereich zwischen beiden mit Kühlvorrichtungen ausgestattet. Die erfordert jedoch erhöhten Bauraum, der in entsprechendem Ausmaß nicht immer vorhanden ist.

Die JP 2011 058517 A zeigt eine Gleitringdichtung, bei der der fest stehende Teil mit einer Kühlung versehen ist.

Die WO 2009/067143 A1 zeigt eine Gleitringdichtung mit einer Wärmeträgerschicht.

Die JP 2007 032652 A zeigt eine Gleitringdichtung mit einem Kühlkörper.

Die US 5 375 852 A zeigt eine Dichtung mit einem Wärmeträgerelement.

Die US 3 419 279 A zeigt eine Gleitringdichtung mit einer Kühlflüssigkeit.

Die DE 1982170 zeigt eine Dichtungsanordnung gemäß dem Oberbegriff des Anspruchs 1.

Allen Vorschlägen gemein ist das Problem unterschiedlicher Wärmeausdehnung bei Erwärmung. Da die Dichtung in einem ganz begrenzten Bereich sehr stark erwärmt wird, kommt es auch zu sehr lokalen Effekten. Innerhalb der beiden Ringe ist dieses Problem bereits sehr gut gelöst, jedoch stellt die Anbindung einer Kühlvorrichtung an den zu kühlenden Ring eine besondere Herausforderung dar, die im genannten Stand der Technik kaum Berücksichtigung findet.

Die Aufgabe der Erfindung ist es, eine Kühlung für eine Dichtungsanordnung bestehend aus einem ersten rotierenden Ring und einem zweiten ortsfesten Ring, wobei beide durch eine Kraft gegeneinander gedrückt werden und dabei eine Dichtfläche bilden, zu schaffen, die einfach herstellbar ist und zuverlässig arbeitet.

Gelöst wird die Aufgabe durch eine Dichtungsanordnung mit einer Kühlvorrichtung, speziell eine Gleitringdichtung, wobei die Dichtungsanordnung einen ersten rotierenden Ring und einen zweiten ortsfesten Ring umfasst, die mittels einer Kraft gegeneinander gedrückt werden, wobei sich zwischen dem ersten und dem zweiten Ring eine Dichtfläche ausbildet, wobei an dem zweiten ortsfesten Ring eine Kühlvorrichtung vorgesehen ist, indem die Kühlvorrichtung einen ersten Bereich zur Wärmeaufnahme, der in direktem Kontakt mit dem zweiten Ring ist und einen zweiten Bereich zur Wärmeabgabe vorsieht, sowie Federelemente mit mindestens zwei Übergabepunkten, das die Wärmeaufnahme dauerhaft gegen den zweiten Ring presst. Dies ermöglicht eine kontinuierliche Kühlung des zweiten Rings. Dehnt sich die gesamte Anordnung bei Erwärmung aus, so wird die Wärmeaufnahme durch die Federelemente fortwährend gegen den zweiten Ring gedrückt, wodurch die Entwärmung gesichert ist.

Der Federbereich wird durch eine Wärmeleitfolie ausgebildet. Diese bringt sowohl eine gute Wärmeleitfähigkeit als auch eine ausreichende Federwirkung mit.

Die Wärmeaufnahme, die Wärmeabgabe und das Federelement sind aus einem einzigen Materialien hergestellt, insbesondere einstückig. Dies hat den Vorteil, dass innerhalb der Kühlvorrichtung keine unterschiedliche Ausdehnung zu erwarten ist. Alle Komponenten dehnen sich gleichmäßig. Bei schneller Wärmeleitung innerhalb der Kühlvorrichtung sollten Spannungen vermieden werden. Durch das Federelement werden Übergangsphasen zusätzlich abgemildert. Der Wärmeübertrag von einer Komponente auf die andere wird durch eine geeignete Form des Übergabepunktes wesentlich beeinfiusst.

In einer Ausgestaltung der Erfindung werden die Zwischenräume in der Kühlvorrichtung mit Wärmeleitmaterial gefüllt, insbesondere mit Wärmeleitpaste oder -pads. Dies erhöht die Kühlwirkung weiter, da die Bereiche der Wärmesperren deutlich verringert werden können. Bei einer einstückigen Ausführung der Kühlvorrichtung ist der Federbereich beispielsweise durch Brenn-, Laser- oder Wasserstrahlschneiden aus einem Vollmaterial hergestellt oder die gesamte Kühlvorrichtung ist in einem 3d Druckverfahren gestaltet. Alternativ lässt sich die Kühlvorrichtung in einer mehrstückigen Ausführung herstellen.

In einer weiteren Ausgestaltung werden der Bereich zur Wärmeabgabe und/oder die Zwischenräume von einem Kühlmedium umströmt, wodurch ein großer Wärmegradient eingestellt werden kann, der die Entwärmung der Dichtungsanordnung deutlich verbessern kann. Dies wir weiter verbessert, indem in dem Bereich zur Wärmeabgabe Vorrichtungen zur Entwärmung vorgesehen sind, insbesondere Kühlkörper und/oder Kühlrohre, die die Oberfläche zur Kühleren Umgebung vergrößern,. Außerdem lassen sich durch die geometrische Ausgestaltung der Kühlkörper gezielt Verwirbelungen erzeugen, die die Verweilzeit des Umgebungsmediums verlängern, wodurch die Kühlwirkung verbessert wird.

Die Wahl der Materialien hat einen deutlichen Einfluss auf die Wirkung der Kühlung. Die Wärmeaufnahme, die Wärmeabgabe und das Federelement sind aus Materialien mit hoher Wärmeleitfähigkeit hergestellt, insbesondere eignen sich Kupfer, Silber oder diese enthaltende Legierungen, aber auch Gallium oder Indium sind Gegenstand aktueller Forschung ebenso wie beispielsweise verschiedene Kohlenstoffverbindungen. Je besser die Wärmeleitung der Verwendeten Materialien ist, desto einfacher wird die Dichtungsanordnung entwärmt.

In einer weiteren Ausgestaltung besteht der Wärmeaufnehmer aus einzelnen Segmenten, die an den zweiten Ring angedrückt werden. Dies verringert zusätzlich kurzfristig auftretende geometrische Unterschiede in der Phase der Erwärmung. Die einzelnen Segmente werden jeweils durch eigene Federelemente an den zweiten Ring gedrückt, um einen guten thermischen Kontakt zu halten.

Weitere vorteilhafte Ausgestaltungen können sich aus der Kombination genannter Merkmale ergeben und sind hier nicht gesondert aufgezählt.

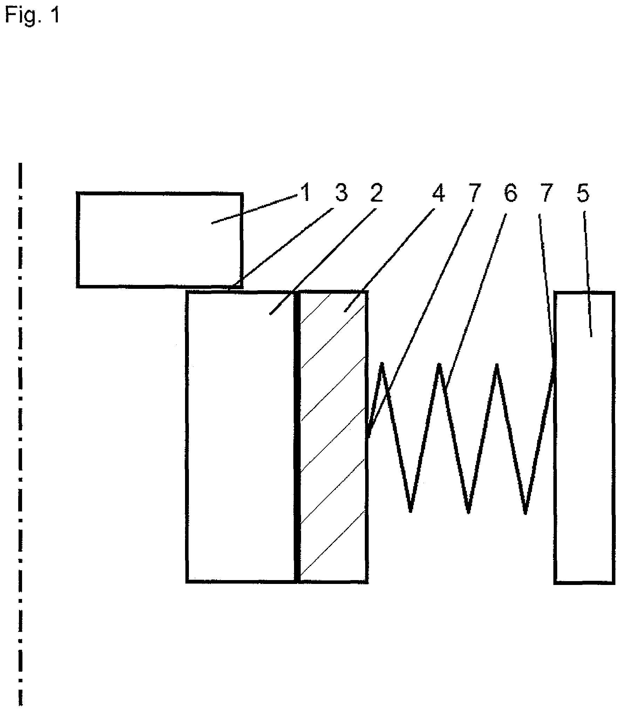

Anhand eines Ausführungsbeispiels wird die Erfindung näher erläutert. Die Zeichnung zeigt eine erfindungsgemäße Kühlung einer Dichtungsanordnung in einer einfachen, schematischen Darstellung. Der rotierende, mit der drehenden Welle verbundene erste Ring 1 und der mit dem Gehäuse verbundene ortsfeste zweite Ring 2 bilden gemeinsam die Dichtfläche 3 aus. Die Feder, die die beiden Ringe aufeinander presst, ist aus Gründen der Übersicht nicht dargestellt. Vom ortsfesten zweiten Ring 2 soll die Wärme auf den Wärmeaufnehmer 4 übertragen werden. Dieser wird seinerseits die Wärme an einen Wärmeabgeber 5 weiterleiten. Der Wärmeübertrag zwischen dem zweiten Ring und dem Wärmeaufnehmer 4 hängt wesentlich vom Kontakt zwischen den Bauteilen ab. Dieser Kontakt darf nicht durch unterschiedliche Wärmeausdehnung des zweiten Rings 2 und des Wärmeaufnehmerns 4 verringert werden, da sonst keine Wärme mehr übertragen werden kann und die Dichtungsanordnung beschädigt wird. Um den Kontakt fortwährend und vor allem in Fall beginnender Erwärmung der Bauteile konstant gut zu erhalten, wird der Wärmeaufnehmer 4mittels eines Federelements 6 gegen den zweiten Ring 2 gedrückt, wobei sich das Federelement 6 am Wärmeabgeber 5 abstützt. Die Übergabepunkte 7 sind ebenfalls wesentlich für die Wirkung der Kühlungsvorrichtung. Sowohl Material als auch die Geometrie der Übergabepunkte 7 sind so zu wählen, dass die Energie zwischen den Bauteilen Wärmeaufnehmer4, Federelement 5 und Wärmeabgeber 6 ohne Hindernisse weitergeleitet werden kann.

### Bezugszeichenliste

- 1.: Erster Ring (rotierend)
- 2.: Zweiter Ring (ortsfest)
- 3.: Dichtfläche
- 4.: Wärmeaufnehmer
- 5.: Wärmeabgeber
- 6.: Federelement
- 7.: Übergabepunkt

## Patentansprüche

1. Dichtungsanordnung mit einer Kühlvorrichtung, insbesondere eine Gleitringdichtung, wobei die Dichtungsanordnung einen ersten rotierenden Ring (1) und einen zweiten ortsfesten Ring (2) umfasst, die mittels einer Kraft gegeneinander gedrückt werden, wobei sich zwischen dem ersten und dem zweiten Ring (1, 2) eine Dichtfläche (3) ausbildet, wobei an dem zweiten ortsfesten Ring (2) eine Kühlvorrichtung vorgesehen ist, wobei die Kühlvorrichtung einen ersten Bereich zur Wärmeaufnahme (4), der in direktem Kontakt mit dem zweiten Ring (2) ist und einen zweiten Bereich zur Wärmeabgabe (5), sowie Federelemente (6) mit mindestens zwei Übergabepunkten (7), die die Wärmeaufnahme (4) dauerhaft gegen den zweiten Ring (2) pressen wobei die Federelemente (6) durch eine Wärmeleitfolie gebildet werden
**dadurch gekennzeichnet, dass**
die Wärmeaufnahme (4), die Wärmeabgabe (5) und das Federelement (6) aus einem einzigen Material hergestellt sind, insbesondere einstückig.

2. Dichtungsanordnung nach Anspruch 1, **dadurch gekennzeichnet, dass** Zwischenräume in der Kühlvorrichtung mit Wärmeleitmaterial gefüllt sind.

3. Dichtungsanordnung nach einem der vorherigen Ansprüche, **dadurch gekennzeichnet, dass** der Bereich zur Wärmeabgabe und/oder Zwischenräume von einem Kühlmedium gefüllt und/oder umströmt werden.

4. Dichtungsanordnung nach einem der vorherigen Ansprüche, **dadurch gekennzeichnet, dass** in dem Bereich zur Wärmeabgabe Vorrichtungen zur Entwärmung vorgesehen sind, insbesondere Kühlkörper und/oder Kühlrohre.

5. Dichtungsanordnung nach einem der vorherigen Ansprüche, **dadurch gekennzeichnet, dass** die Wärmeaufnahme (4), die Wärmeabgabe (5) und das Federelement (6) aus Materialien mit hoher Wärmeleitfähigkeit hergestellt sind, insbesondere aus Kupfer, Silber oder diese enthaltende Legierungen.

6. Dichtungsanordnung nach einem der vorherigen Ansprüche, **dadurch gekennzeichnet, dass** der Wärmeaufnehmer (4) aus einzelnen Segmenten besteht, die an den zweiten Ring angedrückt werden.

## Claims

1. Sealing arrangement with a cooling device, in particular a mechanical seal, wherein the sealing arrangement comprises a first, rotating ring (1) and a second, fixed ring (2), which are pressed against one another by means of a force, wherein a sealing surface (3) is formed between the first and the second ring (1, 2), wherein a cooling device is provided on the second, fixed ring (2), wherein the cooling device has a first region for absorbing heat (4), which is in direct contact with the second ring (2), and a second region for dissipating heat (5), and also spring elements (6) with at least two transfer points (7), which press the heat absorber (4) continuously against the second ring (2), wherein the spring elements (6) are formed by a heat conducting foil,
**characterized in that**
the heat absorber (4), the heat dissipator (5) and the spring element (6) are produced from a single material, in particular integrally.

2. Sealing arrangement according to Claim 1, **characterized in that** interspaces in the cooling device are filled with thermally conductive material.

3. Sealing arrangement according to one of the preceding claims, **characterized in that** a cooling medium fills and/or flows around the region for dissipating heat and/or interspaces.

4. Sealing arrangement according to one of the preceding claims, **characterized in that** devices for removing heat, in particular heat sinks and/or cooling tubes, are provided in the region for dissipating heat.

5. Sealing arrangement according to one of the preceding claims, **characterized in that** the heat absorber (4), the heat dissipator (5) and the spring element (6) are produced from materials of high thermal conductivity, in particular from copper, silver or alloys containing these.

6. Sealing arrangement according to one of the preceding claims, **characterized in that** the heat absorber (4) consists of individual segments, which are pressed against the second ring.

## Revendications

1. Ensemble d'étanchéité comprenant un dispositif de refroidissement, en particulier une garniture d'étanchéité mécanique, l'ensemble d'étanchéité comprenant un premier anneau tournant (1) et un deuxième anneau fixe (2) qui sont pressés l'un contre l'autre par une force, une surface d'étanchéité (3) étant formée entre les premier et deuxième anneaux (1, 2), un dispositif de refroidissement étant prévu au niveau du deuxième anneau fixe (2), le dispositif de refroidissement comportant une première région d'absorption de chaleur (4) qui est en contact direct avec le deuxième anneau (2) et une deuxième région de dissipation de chaleur (5) ainsi que des éléments à ressort (6) comportant au moins deux points de transfert (7) qui pressent la région d'absorption de chaleur (4) de façon permanente contre le deuxième anneau (2), les éléments à ressort (6) étant formés par un film thermoconducteur,
**caractérisé en ce que**
la région d'absorption de chaleur (4), la région de dissipation de chaleur (5) et l'élément à ressort (6) sont fabriqués à partir d'un seul matériau, en particulier d'une seule pièce.

2. Ensemble d'étanchéité selon la revendication 1, **caractérisé en ce que** les espaces intermédiaires dans le dispositif de refroidissement sont remplis d'un matériau thermoconducteur.

3. Ensemble d'étanchéité selon l'une des revendications précédentes, **caractérisé en ce que** la région de dissipation de chaleur et/ou les espaces intermédiaires sont remplis et/ou traversés par un agent de refroidissement.

4. Ensemble d'étanchéité selon l'une des revendications précédentes, **caractérisé en ce que** des dispositifs dissipateurs de chaleur, en particulier des corps de refroidissement et/ ou des tubes de refroidissement, sont prévus dans la région de dissipation de chaleur.

5. Ensemble d'étanchéité selon l'une des revendications précédentes, **caractérisé en ce que** la région d'absorption de chaleur (4), la région de dissipation de chaleur (5) et l'élément à ressort (6) sont fabriqués à partir de matériaux à haute conductivité thermique, en particulier de cuivre, d'argent ou d'alliages contenant ceux-ci.

6. Ensemble d'étanchéité selon l'une des revendications précédentes, **caractérisé en ce que** la région d'absorption de chaleur (4) est formée de segments individuels qui sont pressés contre le deuxième anneau.
